# EUROPEAN PATENT SPECIFICATION

(11) **EP 1 584 526 B1**
(45) Date of publication and mention of the grant of the patent: **06.07.2011**
(21) Application number: 05101212.8
(22) Date of filing: 18.02.2005
(51) Int. Cl.: B60R 25/10, E05B 65/36

(54) **Device for controlling a vehicle locking system and a vehicle alarm**
Vorrichtung zur Steuerung eines Kraftfahrzeug-Schliesssystemes und einer Kraftfahrzeug-Alarmanlage
Dispositif de contrôle pour un système de fermeture et d'alarme d'un véhicule automobile

(30) Priority: 29.03.2004 SE 4008439
(43) Date of publication of application: 12.10.2005
(73) Proprietor: Scania CV AB, 151 87 Södertälje (SE)
(72) Inventor: Bergsten, Fredrik, 155 34, Nykvarn (SE); Runefelt, Daniel, 151 45, Södertälje (SE)

(56) References cited:
- DE-A1- 10 118 974
- US-A- 4 887 065
- US-A- 5 216 406

## Description

### TECHNICAL FIELD OF THE INVENTION AND PRIOR ART

The present invention concerns a device and method for controlling a vehicle locking system and a vehicle intrusion alarm. The invention also relates to a vehicle incorporating such a device, a computer program and electronic control unit (ECU).

Many vehicles comprise a combined central locking and intrusion or burglar alarm system. The control device for the combined system usually comprises at least one locking actuator comprising an electric motor that drives one or more locking elements into a locked or an unlocked position on receiving a signal to do so. The central locking system comprises means to determine whether the locking elements are in a locked or an unlocked position.

Once the position of the locking elements has been determined a signal is usually sent to the ECU of an intrusion alarm. Each locking actuator is arranged to send either a signal indicating that the locking element(s) which it controls is/are in a locked position or a signal indicating that said locking element(s) is/are in an unlocked position. The intrusion alarm is automatically activated when its ECU receives the electric signal confirming that the locking element(s) is/are locked i.e. the alarm is switched on ready to be triggered if an intrusion attempt is detected when the vehicle has been locked.

US 4887065 discloses such a control device. The device described therein is constructed in such a way that a false alarm, i.e. an unintentionally triggered alarm, may deactivated using a designated key. US 4887065 does not however describe any way of avoiding a false alarm. False alarms may occur if the control device cannot differentiate between the signal indicating that the locking elements are in a locked position and the signal indicating that the locking elements are in a an unlocked position. Such a problem may arise if a locking actuator is powered by an old or weakened battery whose voltage has decreased and which does not therefore provide the required signals.

US 5216406 disclose a central locking system and an anti-theft alarm system in a motor vehicle which is controlled by a control unit common to both systems. Activating of the alarm is prevented if at least one of the locks is not in the locked state.

DE 10118974 describes an arrangement for deactivation theft warning system which comprises a door lock with an evaluation device nearby with a switch output for deactivate a theft warning system and a door key with a transponder that can send a transponder signal to the evaluation device.

### SUMMARY OF THE INVENTION

The object of the present invention is to provide a control device for a vehicle locking system and a vehicle intrusion alarm in which the occurrence of false alarms is avoided.

This object is fulfilled with a device having the features of claim 1 namely a device comprising at least one locking actuator having an electric motor arranged to drive at least one locking element at least into a locked or an unlocked position. The locking actuator has means to provide the electronic control unit (ECU) of an intrusion alarm with a first signal when the, or each, locking element is in a locked position and with a second signal when the, or each, locking element is in an unlocked position. The device comprises means to sense a characteristic of the first and second signals and means to enable the operation of the intrusion alarm if the characteristic of one of the signals is above a predetermined threshold value and/or means to disable the operation of an intrusion alarm if the characteristic of one of the signals is above a predetermined threshold value or vice versa i.e. the device comprises means to enable the operation of the intrusion alarm if the characteristic of one of the signals is below a predetermined threshold value and/or means to disable the operation of an intrusion alarm if the characteristic of one of the signals is above a predetermined threshold value.

The sensed characteristic is any property of the signal that is affected by a decrease in the device's power supply. According to the invention the signals are electrical signals and an electrical characteristic of the signals such as electric current or voltage is sensed.

According to another embodiment of the invention the means for providing electrical signals is arranged to provide a first signal having a voltage substantially equal to ground voltage and a second electric signal having a voltage substantially equal to the device's power supply voltage. The device is supplied with power from the vehicle battery or any other DC voltage source. If the power supply voltage is 24 V for example the voltage of the first and second signal should be either high (24 V), or low (0 V) depending on the position of the locking element(s).

In practice a high voltage signal is defined as a signal within a particular high voltage range (18-24 V for example) and a low voltage signal is defined as a signal within a lower voltage range (0-5 V for example). If the voltage of the high voltage signal decreases outside of the high voltage range (to 14 V for example) due to a decrease in the power supply voltage it is no longer possible for the device to accurately determine the position of the locking element(s) because the voltage of the signals is too close to differentiate between the signals. The device therefore comprises means to stop sensing the position of the locking element(s) and means to disable the intrusion alarm if the voltage of the high voltage signal decreases below a predetermined threshold voltage (such as 18 V).

This prevents false alarms from occurring due to the device confusing a high voltage signal for a low voltage signal and therefore assuming that the locking elements have been unlocked instead of recognising that the lower voltage of a signal that it receives is due to a decrease in the power supply voltage. When the power supply voltage of the higher voltage signal is below a predetermined threshold value (18V for example) the locking actuators will not be activated or sensed for alarm trigger and will have to be locked and unlocked manually by a key for example.

According to an embodiment of the invention the predetermined threshold value is approximately 60-80% of the reference characteristic value i.e. the value expected when the device is full powered. If the voltage of an electric signal is sensed for example, the threshold value is approximately 60-80% of the power supply voltage. The threshold value is set to a value that enables the device to accurately determine whether a locking element is in a locked or an unlocked position.

According to the invention the signals are sent to the ECU via wired or wireless bi-directional (input/output) communication means. The ECU detects a characteristic of the signal in the bi-directional communication means such as the electric current using resistors for example. According to the invention the disabling means are arranged to disable the bi-directional communication means if the sensed characteristic of one of the signals decreases below a threshold value.

According to an embodiment of the invention the disabling means are arranged to disable the operation of an intrusion alarm if the sensed characteristic of one of the signals is below a predetermined threshold value for a predetermined period of time. A time delay of a few seconds, for example, before the operation of an intrusion alarm is disabled removes the risk of disabling the alarm due to a momentary power cut or voltage drop.

According to a embodiment of the invention the device is arranged to sense a characteristic of the first signal constantly, periodically or intermittently while the intrusion alarm is enabled. This means that not only may the alarm be disabled when the vehicle is locked but it may also be disabled after the vehicle has been locked if the device's power supply decreases while the intrusion alarm is enabled. This may, for example, be necessary if the vehicle is left overnight with its lights switched on causing its battery to gradually discharge.

According to another embodiment of the invention the device comprises means to connect itself to a back-up power supply, such as a backup battery, when a sensed characteristic has decreased below said predetermined threshold value and means to re-enable the operation of the intrusion alarm once the back up power supply has been connected.

According to a further embodiment of the invention the device is arranged to provide at least one warning, to the owner of the vehicle for example, when a characteristic of one of the signals decreases below a threshold value and before the operation of the intrusion alarm is disabled.

According to an embodiment of the invention the device is arranged to be operated by designated key means, such as a key, a key card or a signal sent from a remote unit, and comprises means to detect whether it has been operated by said designated key means. According to an embodiment of the invention said means to detect whether the device has been operated by the designated key means comprises a first switch that is operated by designated key means and a motor and a second switch that is operated by a motor only. The device comprises means to sense the movement of each switch and means to check whether the switches are moved into their locked/unlocked positions at different times: indicating that designated key means have been used or whether the switches are moved into their locked/unlocked positions simultaneously: indicating that the switches have been moved by the motor only.

The present invention also relates to a vehicle comprising a device according to any of the embodiments of the invention and a vehicle in which the vehicle battery provides the device's power supply.

The present invention furthermore concerns a method for controlling a vehicle locking system and a vehicle intrusion alarm. The method comprises the step of providing the ECU of the intrusion alarm with a first signal from a locking system when a locking element is in a locked position and with a second signal from the locking system when a locking element is in an unlocked position. The method also comprises the steps of sensing a characteristic of said signals, enabling the operation of the intrusion alarm if the characteristic of one of the said at least two signals is above a threshold value and/or disabling the operation of the intrusion alarm if the characteristic of one of the signals is below said threshold value or vice versa i.e the method comprises the step of enabling the operation of the intrusion alarm if the characteristic of one of the said at least two signals is below a threshold value and/or disabling the operation of the intrusion alarm if the characteristic of one of the signals is above said threshold value.

According to an embodiment of the invention the method comprises the step of constantly, periodically or intermittently, sensing a characteristic of the first signal while the intrusion alarm is enabled.

According to the invention the method further comprises the step of sending the signals to said ECU via bi-directional communication means whereby the ECU detects a characteristic of the signals in the bi-directional communication means. According to the invention it further comprises the step of disabling the bi-directional communication means if the sensed characteristic of one of the signals decreases below the threshold value.

An intrusion alarm ECU therefore receives input signals that allow the ECU to ascertain that the doors or windows of a vehicle have been locked for example. It is possible to arrange the ECU to lock/unlock only selected doors or windows and to provide information as to which of a vehicle's doors or windows have been locked. This may for example be useful if the driver of a long distance vehicle wants to lock the driver cabin doors but unlock the cargo space entrance to load the vehicle.

According to a yet further embodiment of the invention the method further comprises the step of the disabling the operation of an intrusion alarm if the characteristic is below a predetermined threshold value for a predetermined period of time. According to a yet further embodiment of the invention it comprises the step of determining whether the locking system has been operated by designated key means.

The present invention also relates to a computer program product comprising a computer program stored by means of a computer-readable medium arranged to make a computer or processor execute the steps of a method according any of the embodiments of the invention.

The present invention even concerns an electronic control unit comprising execution means, a memory and data storage means whereby a computer program to make a computer or processor execute the steps of a method according to any of the embodiments of the invention is stored in said data storage means.

Further advantages as well as advantageous features of the invention appear from the following description and the other dependent claims.

### BRIEF DESCRIPTION OF THE DRAWINGS

- Fig. 1: shows a device for controlling a vehicle central locking system and a vehicle intrusion alarm according to an embodiment of the invention,
- Fig. 2: shows a flow chart of a method according to an embodiment of the invention, and
- Fig. 3: shows a vehicle according to an embodiment of the invention.

The following description and drawings are not intended to limit the present invention to the embodiment disclosed. The embodiment disclosed merely exemplifies the principles of the present invention.

### DETAILED DESCRIPTION OF AN EMBODIMENT OF THE INVENTION

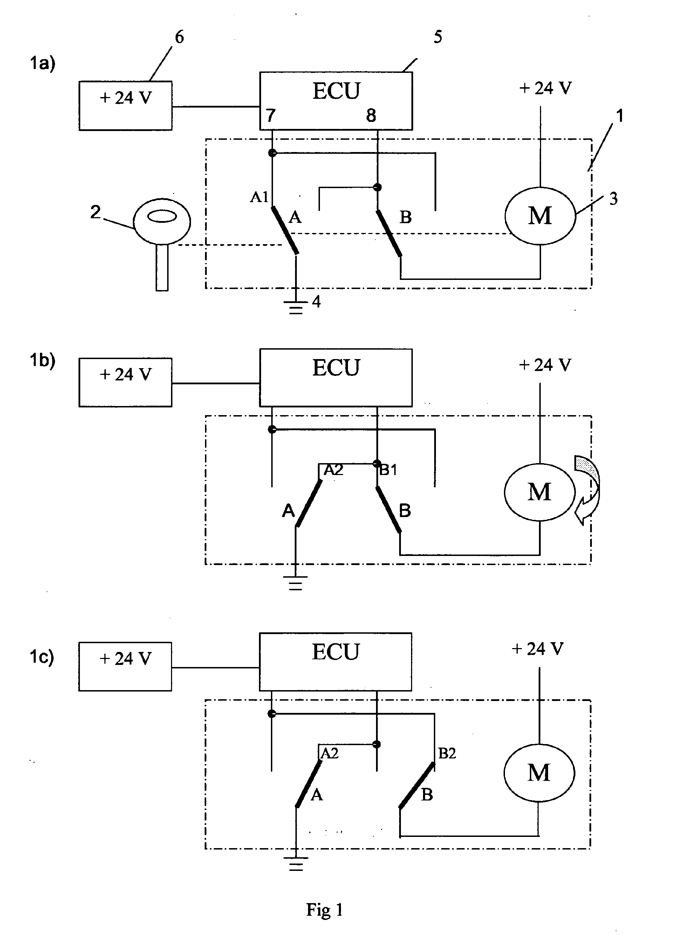

Figure 1a shows a device for controlling a vehicle central locking system and a vehicle alarm. The device comprises a locking actuator 1 that is actuated by means of a first switch A that is operated mechanically by a key 2. The device could however be actuated by any other means such as a locking/unlocking button, a door handle or a remote actuation unit. The locking actuator contains an electric motor 3 connected in series with the first switch A and a second switch B. The electric motor 3 drives one or more locking elements (not shown) into a locking position to lock the passengers' doors and driver's door of the vehicle for example.

One end of the first switch A is connected to ground 4. The other end of the first switch A can move between two positions A1 and A2. When the first switch is in position A1 a signal is sent to the ECU 5 of an intrusion alarm via an "unlocked" control line to terminal 7. When the first switch is in position A2 a "locked" signal is sent to the ECU 5 of an intrusion alarm via a control line to terminal 8.

The second switch B is operated electrically by the electric motor 3. The motor 3 is fed with a voltage of + 24 V. The second switch B can move between two positions B1 and B2. When the second switch B is in position B1 a "locked" signal is sent to the ECU 5 via a control line to terminal 8. When the second switch B is in position B2 an "unlocked" signal is sent to the ECU 5 via a control line to terminal 7. Switches A and B may be any type of switch such as a relay, transistor or thyristor switch.

The ECU 5 comprises means to sense a characteristic, such as the voltage in the "unlocked" control line between points A1, B2 and terminal 7 and the "locked" control line between points A2, B1 and terminal 8. The ECU 5 can therefore determine the position of the switches A and B from the voltage it senses in the control lines. The function of sensing a characteristic of the signals sent to the ECU of the intrusion alarm may however be carried out by any other means rather than the ECU itself.

The operation of the locking actuator will now be described. When the first switch A is in position A1 as shown in figure 1a the locking element(s) controlled by the locking actuator is/are in an unlocked position and the intrusion alarm is therefore deactivated. When the first switch A is operated by the key 2 in order to lock said locking element(s) the first switch is moved into position A2, as shown in figure 1b. Ground 4 will then be supplied to the motor 3 through the first switch A and the second switch B that is in position B1. This automatically triggers the motor 3 to lock the locking elements(s) it drives and the movement of the motor 3 causes it to rotate through half a revolution until it causes the second switch B to move into position B2. When the second switch B is in position B2 it stops the ground signal being supplied to the motor 3 and consequently causes the motor to stop rotating. The vehicle remains locked and alarm protected until the first switch A is moved from position A2 to A1. If the battery 6 voltage drops below a predetermined threshold level (18V for example) the voltage in the control lines will not be sensed and the locking actuator 1 will not be activated for alarm trigger. The locking actuator will then have to be locked and unlocked manually by a key for example.

The rotation of the motor 3 should cause both of the switches A and B to move into positions A2 and B2 respectively as shown in figure 1c. However the first switch A in this case was already in position A2 due to the action of the key 2. If the first switch A had not been operated by an authorized user using a key 2 but by a burglar who had manipulated the wiring of the device, for example, then the ECU 5 would be able to detect that the first switch A had been moved from position A1 to A2 when the motor 3 rotated through half a revolution rather than just detecting that the second switch B had moved from B1 to B2. According to an embodiment of the invention the device is arranged to trigger an intruder alarm if the locking elements are moved from a locked to an unlocked position in the absence of designated key means.

The switches described in this embodiment of the invention move between two positions however switches may be arranged to move between any number of positions. Apart from a locked and unlocked position a child safety position may be provided for example.

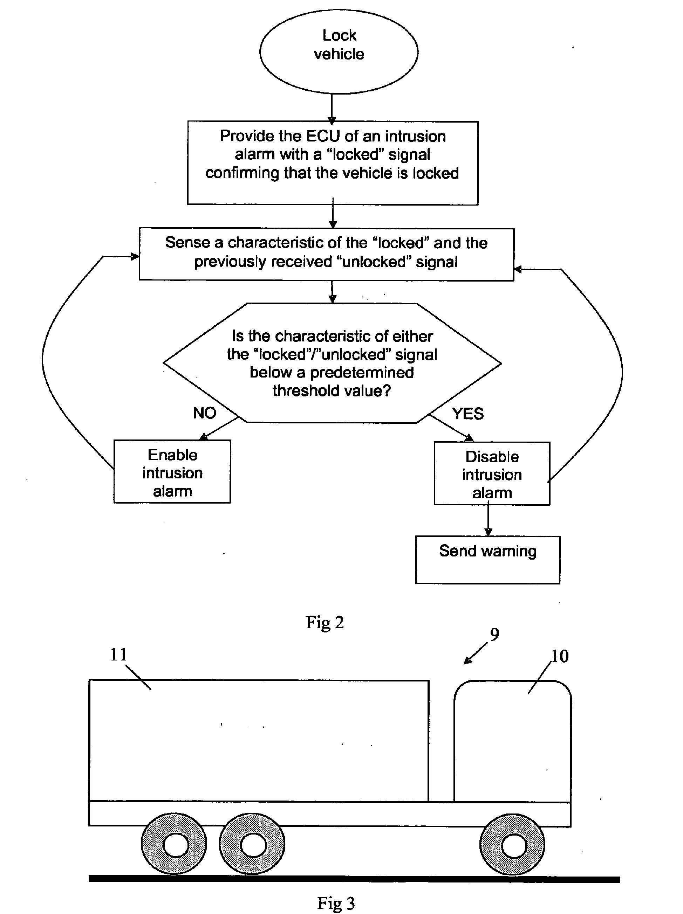

Figure 2 shows a flow chart of a method according to an embodiment of the invention. As soon as a vehicle is locked the ECU of an intrusion is provided with a "locked" signal confirming that the vehicle is locked". A characteristic such as the voltage of the "locked" signal is sensed. If the characteristic of either the received "locked" signal or the previously received "unlocked" signal is below a predetermined threshold voltage, the operation of the intrusion alarm is disabled and a warning is sent to the owner of the vehicle. However the ECU constantly, periodically or intermittently continues to sense a characteristic of said signal in case it again increases above the predetermined threshold value, in which case the operation of the intrusion alarm would again be enabled.

If the sensed characteristic is above the predetermined threshold voltage then the operation of the intrusion alarm is enabled. If the operation of the intrusion alarm is enabled the ECU constantly, periodically or intermittently senses a characteristic of the "locked signal" to make sure that it does not fallen below the predetermined threshold voltage.

Figure 3 shows a vehicle 9 having a driver's cabin 10 and a cargo area 11. The driver's cabin comprises a driver's door and a passenger door and the cargo area comprises a rear opening all of which are locked and unlocked centrally. The vehicle comprises an intrusion alarm that is activated when an intrusion attempt is detected. The vehicle's locking and alarm systems are controlled using a device according to any of the embodiments of the invention. According to an embodiment of the invention the vehicle comprises means to inform an owner/ a driver of the vehicle if an intrusion attempt is detected and if the operation of the vehicle's intrusion alarm is disabled.

The invention is of course not in any way restricted to the embodiments thereof described above, but many possibilities to modifications thereof would be apparent to a man with ordinary skill in the art without departing from the basic idea of the invention as defined in the appended claims.

## Claims

1. Device, for controlling a vehicle locking system and a vehicle intrusion alarm, comprising at least one locking actuator (1) having an electric motor (3) arranged to drive at least one locking element at least into a locked or an unlocked position and having means (4,5,6,7,8,A,B) to provide the electronic control unit (ECU) (5) of an intrusion alarm with a first signal when the, or each, locking element is in a locked position and with a second signal when the, or each, locking element is in an unlocked position, wherein the device comprises means to sense a characteristic of the first and second signals and means to enable the operation of the intrusion alarm if the characteristic of one of the signals is above a predetermined threshold value and/or means to disable the operation of an intrusion alarm if the characteristic of one of the signals is below a predetermined threshold value or vice versa, wherein the signals are electrical signals and an electrical characteristic of the signals such as electric current or voltage is sensed, ***characterized* in that** the signals are sent to the ECU (5) via wired or wireless bi-directional communication means whereby the ECU detects a characteristic of the signal in the bi-directional communication means and the disabling means are arranged to disable the bi-directional communication means if the sensed characteristic of one of the signals decreases below a threshold value.

2. Device according to claim 1, ***characterized* in that** the means for providing electrical signals is arranged to provide a first signal having a voltage substantially equal to ground voltage and a second electric signal having a voltage substantially equal to the device's power supply voltage.

3. Device according to claim 2, ***characterized* in that** the predetermined threshold value is approximately 60-80% of the reference characteristic value i.e. the value expected when the device is full powered.

4. Device according to any of the preceding claims, ***characterized* in that** the disabling means are arranged to disable the operation of an intrusion alarm if the sensed characteristic of one of the signals is below a predetermined threshold value for a predetermined period of time.

5. Device according to any of the preceding claims, ***characterized* in that** it is arranged to sense a characteristic of the first signal constantly, periodically or intermittently while the intrusion alarm is enabled.

6. Device according to any of the preceding claims, ***characterized* in that** it comprises means to connect to the device to a back-up power supply, such as a backup battery, when a sensed characteristic has decreased below the threshold value and means to re-enable the operation of the intrusion alarm once the back up power supply has been connected.

7. Device according to any of the preceding claims, ***characterized* in that** it is arranged to provide at least one warning when a characteristic of one of the signals decreases below a threshold value before the operation of the intrusion alarm is disabled.

8. Device according to any of the preceding claims, ***characterized* in that** it is arranged to be operated by designated key means (2) and comprises means to detect whether it has been operated by the designated key means (2).

9. Device according to claim 8, ***characterized* in that** said means to detect whether the device has been operated by the designated key means (2) comprises a first switch (A) that is operated by designated key means (2) and a motor (3) and a second switch (B) that is operated by a motor (3) only whereby the device comprises means to sense the movement of each switch (A,B) and means to check whether the switches (A, B) are moved into their locked/unlocked positions at different times: indicating that designated key means (2) have been used or whether the switches are moved into their locked/unlocked positions simultaneously: indicating that the switches have been moved by the motor (3) only.

10. Vehicle (9), ***characterized* in that** it comprises a device according to any of the preceding claims.

11. Vehicle (9) according to claim 10, ***characterized* in that** the vehicle battery provides the device's power supply.

12. Method for controlling a vehicle locking system and a vehicle intrusion alarm, comprising the step of providing the ECU of the intrusion alarm with a first signal from a locking system when a locking element is in a locked position and with a second signal from the locking system when a locking element is in an unlocked position, and it also comprises the steps of sensing a characteristic of said signals, enabling the operation of the intrusion alarm if the characteristic of one of the said at least two signals is above/below a threshold value and/or disabling the operation of the intrusion alarm if the characteristic of one of the signals is below/above said threshold value or vice versa, ***characterized* in that** it further comprises the step of sending the signals to the ECU (5) via bi-directional communication means whereby the ECU detects a characteristic of the signals in the bi-directional communication means and it further comprises the step of disabling the bi-directional communication means if the sensed characteristic of one of the signals decreases below the threshold value.

13. Method according to claim 12, ***characterized* in that** it comprises the step of constantly, periodically or intermittently, sensing a characteristic of the first signal while the intrusion alarm is enabled.

14. Method according to any of claims 12-13, ***characterized* in that** it further comprises the step of disabling the operation of an intrusion alarm if the characteristic is below a predetermined threshold value for a predetermined period of time.

15. Method according to any of claims 12-14, ***characterized* in that** it further comprises the step of determining whether the locking system has been operated by designated key means (2).

16. A computer program product comprising a computer program stored by means of a computer-readable medium arranged to make a computer or processor execute the steps of a method according any of claims 12-15.

17. Electronic control unit (ECU), ***characterized* in that** it comprises execution means, a memory and data storage means whereby a computer program to make a computer or processor execute the steps of a method according to any of claims 12-15 is stored in said data storage means.

## Patentansprüche

1. Vorrichtung zum Steuern eines Fahrzeugverriegelungssystems und eines Fahrzeugeinbruchalarms mit wenigstens einem Verriegelungsaktuator (1), der einen Elektromotor (3) zum Antreiben wenigstens eines Verriegelungselements in wenigstens eine verriegelte und wenigstens eine entriegelte Position und ein Mittel (4, 5, 6, 7, 8, A, B) zum Ausgeben eines ersten Signals an die elektronische Steuereinheit (ECU) (5) eines Einbruchalarms aufweist, wenn das wenigstens eine Verriegelungselement sich in einer Verriegelungsposition befindet, und ein zweites Signal ausgibt, wenn das wenigstens eine Verriegelungselement in einer entriegelten Position ist, wobei die Vorrichtung ein Mittel zum Sensieren eines Merkmals des ersten und zweiten Signals und Mittel zum Betätigen des Einbruchalarms aufweist, wenn das Merkmal eines der Signale über einem vorbestimmten Grenzwert liegt, und/oder Mittel zum Abschalten des Einbruchalarms aufweist, wenn das Merkmal eines der Signale unterhalb eines vorbestimmten Grenzwerts oder umgekehrt liegt, wobei die Signale elektrische Signale sind und das elektrische Merkmale der Signale, insbesondere der elektrische Strom oder die Spannung, sensiert werden,
**dadurch gekennzeichnet, dass** die Signale von der ECU (5) über verkabelte oder kabellose bidirektionale Kommunikationsmittel gesendet werden, wobei die ECU ein Merkmal des Signals in den bidirektionalen Kommunikationsmitteln erfasst und die Abschaltemittel zum Abschalten der bidirektionalen Kommunikationsmittel angeordnet sind, wenn das sensierte Merkmal unter einen Grenzwert abfällt.

2. Vorrichtung nach Anspruch 1,
**dadurch gekennzeichnet, dass** die Mittel zum Bereitstellen der elektronischen Signale vorgesehen sind, um ein erstes Signal mit einer Spannung, die im Wesentlichen gleich der Grundspannung ist, und ein zweites Signal mit einer Spannung zu erzeugen, die im Wesentlichen gleich zu der Spannung der Vorrichtungsstromquelle ist.

3. Vorrichtung nach Anspruch 2,
**dadurch gekennzeichnet, dass** der vorbestimmte Grenzwert im Wesentlichen zwischen 60 bis 80% des Bezugseigenschaftswerts, dem erwarteten Wert, wenn die Vorrichtung mit voller Leistung angetrieben wird, entspricht.

4. Vorrichtung nach einem der voranstehenden Ansprüche,
**dadurch gekennzeichnet, dass** die Abschaltemittel vorgesehen sind, um den Einbruchalarm abzuschalten, wenn das sensierte Merkmal eines der Signale sich für eine vorbestimmte Zeitspanne unterhalb eines vorbestimmten Grenzwertes befindet.

5. Vorrichtung nach einem der voranstehenden Ansprüche,
**dadurch gekennzeichnet, dass** die Vorrichtung zum konstanten, periodischen oder stoßweisen Sensieren des ersten Signals angeordnet ist, wenn der Einbruchalarm eingeschaltet ist.

6. Vorrichtung nach einem der voranstehenden Ansprüche,
**dadurch gekennzeichnet, dass** die Vorrichtung Mittel zum Verbinden der Vorrichtung mit einer Notstromversorgung, insbesondere einer Notstrombatterie, umfasst, wenn ein sensiertes Merkmal unter den Grenzwert abfällt, und Mittel zum erneuten Einschalten des Einbruchalarms, falls der Einbruchalarm mit der Notstromversorgung verbunden wurde.

7. Vorrichtung nach einem der voranstehenden Ansprüche,
**dadurch gekennzeichnet, dass** die Vorrichtung zum Bereitstellen wenigstens eines Warnsignals angeordnet ist, wenn ein Merkmal des Signals unterhalb eines Grenzwerts abfällt, bevor der Einbruchalarm abgeschaltet wird.

8. Vorrichtung nach einem der voranstehenden Ansprüche,
**dadurch gekennzeichnet, dass** die Vorrichtung durch vorbestimmte Schlüsselmittel (2) betätigbar ist und Mittel zum Erfassen aufweist, ob sie von dem vorbestimmten Schlüsselmittel (2) betätigt wurde.

9. Vorrichtung nach Anspruch 8,
**dadurch gekennzeichnet, dass** die Mittel zum Erfassen, ob die Vorrichtung mit dem vorbestimmten Schlüsseimittel (2) betätigt wurde, einen ersten Schalter (A), der mit dem vorbestimmten Schlüsselmittel (2) betätigt wird, und einen Motor (3) und einen zweiten Schalter (B) umfasst, der nur durch den Motor (3) betätigt wird, wobei die Vorrichtung Mittel zum Erfassen der Bewegung jedes Schalters (A, B) und Mittel zum Prüfen, ob die Schalter (A, B) in ihre Verriegelungs-/Entriegelungspositionen zu verschiedenen Zeiten verlagert wurde, was anzeigt, dass das vorbestimmte Schlüsselmittel (2) benutzt wurde, oder ob die Schalter gleichzeitig ihre Verriegelungs-/Entriegelungspositionen verlagert wurden, was anzeigt, dass die Schalter durch den Motor (3) verlagert wurden.

10. Fahrzeug (9),
**dadurch gekennzeichnet, dass** es eine Vorrichtung nach einem der voranstehenden Ansprüche aufweist.

11. Fahrzeug (9) nach Anspruch (10),
**dadurch gekennzeichnet, dass** die Fahrzeugbatterie die Stromversorgung der Vorrichtung bereitstellt.

12. Verfahren zum Steuern eines Fahrzeugverriegelungssystems und eines Fahrzeugeinbruchalarms, aufweisend den Schritt Bereitstellen eines ersten Signals von einem Verriegelungssystem für die ECU des Einbruchalarms, wenn ein Verriegelungselement sich in einer verriegelten Position befindet, und eines zweiten Signals von dem Verriegelungssystem, wenn ein Verriegelungselement sich in einer entriegelten Position befindet, und ferner aufweisend die Schritte Sensieren eines Merkmals der Signale, Einschalten des Einbruchalarms, falls das Merkmal eines der wenigstens zwei Signale oberhalb/unterhalb eines vorbestimmten Grenzwertes ist und/oder Ausschalten des Einbruchalarms, wenn das Merkmal eines der Signale oberhalb/unterhalb des Grenzwertes oder umgekehrt ist,
**dadurch gekennzeichnet, dass** das Verfahren ferner die Schritte aufweist Senden der Signale an die ECU (5) über bidirektionale Kommunikationsmittel, wobei die ECU ein Merkmal der Signale in den bidirektionalen Kommunikationsmitteln erfasst und das Verfahren ferner den Schritt Abschalten der bidirektionalen Kommunikationsmittel umfasst, falls das sensierte Merkmal eines der Signale unterhalb des Grenzwertes abfällt.

13. Verfahren nach Anspruch 12,
**dadurch gekennzeichnet, dass** das Verfahren den Schritt konstantes, periodisches oder intermittierendes Sensieren eines Merkmals des ersten Signals umfasst, wenn der Einbruchalarm eingeschaltet ist.

14. Verfahren nach einem der Ansprüche 12 oder 13,
**dadurch gekennzeichnet, dass** das Verfahren ferner den Schritt von Abschalten des Einbruchalarms umfasst, falls das Merkmal für eine vorbestimmte Zeitspanne sich unterhalb eines vorbestimmten Grenzwertes befindet.

15. Verfahren nach einem der Ansprüche 12 bis 14,
**dadurch gekennzeichnet, dass** das Verfahren ferner den Schritt Bestimmen umfasst, ob das Verriegelungssystem mit einem vorbestimmten Schlüsselmittel (2) betätigt wurde.

16. Computerprogrammprodukt mit einem auf einem computerlesbaren Medium gespeicherten Computerprogramm, das einen Computer oder Prozessor veranlasst, die Schritte des Verfahrens gemäß einem der Ansprüche 12 bis 15 auszuführen.

17. Elektronische Steuereinheit (ECU),
**dadurch gekennzeichnet, dass** die ECU Ausführungsmittel, einen Arbeitsspeicher und eine Datenspeichervorrichtung aufweist, wobei ein Computerprogramm zum Veranlassen eines Computers oder Prozessors zum Ausführen der Schritte des Verfahrens gemäß einem der Ansprüche 12 bis 15 in dem Datenspeichermittel gespeichert ist.

## Revendications

1. Dispositif de commande d'un système de verrouillage de véhicule et d'une alarme anti-intrusion de véhicule, comprenant au moins un actionneur de verrouillage (1) doté d'un moteur électrique (3), conçu pour placer au moins un élément de verrouillage au moins dans une position verrouillée ou dans une position déverrouillée et comportant des moyens (4, 5, 6, 7, 8, A, B) pour transmettre à l'unité de commande électronique (ECU) d'une alarme anti-intrusion un premier signal lorsque le ou chaque élément de verrouillage est dans une position verrouillée et un second signal lorsque le ou chaque élément de verrouillage est dans une position déverrouillée, le dispositif comprenant des moyens pour capter une caractéristique des premier et second signaux et des moyens pour déshiniber le fonctionnement de l'alarme anti-intrusion si la caractéristique de l'un des signaux est au-dessus d'une valeur seuil prédéterminée et/ou des moyens pour inhiber le fonctionnement d'une alarme anti-intrusion si la caractéristique de l'un des signaux est au-dessous d'une valeur seuil prédéterminée ou vice versa, les signaux étant des signaux électriques et une caractéristique électrique des signaux, telle qu'un courant électrique ou une tension, est captée, ***caractérisé en ce que*** les signaux sont envoyés à l'ECU (5) via des moyens de communication bidirectionnels filaires ou sans fil, l'ECU détectant ainsi une caractéristique du signal passant dans les moyens de communication bidirectionnels, et les moyens d'inhibition sont conçus pour inhiber les moyens de communication bidirectionnels si la caractéristique captée de l'un des signaux tombe en dessous d'une valeur seuil.

2. Dispositif selon la revendication 1, ***caractérisé en ce que*** les moyens pour transmettre des signaux électriques sont conçus pour transmettre un premier signal ayant une tension sensiblement égale à la tension de masse et un second signal électrique ayant une tension sensiblement égale à la tension d'alimentation du dispositif.

3. Dispositif selon la revendication 2, ***caractérisé en ce que*** la valeur seuil prédéterminée est égale à environ 60-80% de la valeur caractéristique de référence, c-à-d de la valeur attendue lorsque le dispositif est totalement alimenté.

4. Dispositif selon l'une quelconque des revendications précédentes, ***caractérisé en ce que*** les moyens d'inhibition sont conçus pour inhiber le fonctionnement d'une alarme anti-intrusion si la caractéristique captée de l'un des signaux est en dessous d'une valeur seuil prédéterminée pendant une période de temps prédéterminée.

5. Dispositif selon l'une quelconque des revendications précédentes, ***caractérisé en ce qu'**il* est conçu pour capter une caractéristique du premier signal de manière constante, périodique ou intermittente pendant que l'alarme anti-intrusion est déshinibée.

6. Dispositif selon l'une quelconque des revendications précédentes, ***caractérisé en ce qu'**il* comprend des moyens pour connecter le dispositif à une alimentation de secours, telle qu'un accumulateur de secours, lorsqu'une caractéristique captée est tombée en dessous de la valeur seuil et des moyens pour déshiniber de nouveau le fonctionnement de l'alarme anti-intrusion une fois que l'alimentation de secours a été connectée.

7. Dispositif selon l'une quelconque des revendications précédentes, ***caractérisé en ce qu'**il* est conçu pour émettre au moins un avertissement lorsqu'une caractéristique de l'un des signaux tombe en dessous d'une valeur seuil avant que le fonctionnement de l'alarme anti-intrusion ne soit inhibé.

8. Dispositif selon l'une quelconque des revendications précédentes, ***caractérisé en ce qu'**il* est conçu pour être actionné par un moyen formant clé dédié (2) et qu'il comprend des moyens pour détecter s'il a été actionné par le moyen formant clé dédié (2).

9. Dispositif selon la revendication 8, ***caractérisé en ce que*** lesdits moyens pour détecter si le dispositif a été actionné par le moyen formant clé dédié (2) comprend un premier commutateur (A) qui est actionné par le moyen formant clé dédié (2) et par un moteur (3) et un second commutateur (B) actionné uniquement par un moteur (3), le dispositif comprenant ainsi des moyens pour capter le mouvement de chaque commutateur (A, B) et des moyens pour vérifier si les commutateurs (A, B) sont placés dans leur position verrouillée ou déverrouillée à des moments différents : ce qui indique que le moyen formant clé dédié (2) a été utilisé ou si les commutateurs sont placés dans leur position verrouillée ou déverrouillée simultanément : ce qui indique que les commutateurs ont été déplacés uniquement par le moteur (3).

10. Véhicule (9), ***caractérisé en ce qu'**il* comprend un dispositif selon l'une quelconque des revendications précédentes.

11. Véhicule (9) selon la revendication 10, ***caractérisé en ce que*** l'accumulateur du véhicule fournit l'alimentation du dispositif.

12. Procédé pour commander un système de verrouillage de véhicule et une alarme anti-intrusion de véhicule, comprenant l'étape consistant à transmettre à l'ECU de l'alarme anti-intrusion un premier signal provenant d'un système de verrouillage lorsqu'un élément de verrouillage est dans une position verrouillée et un second signal provenant du système de verrouillage lorsqu'un élément de verrouillage est dans une position déverrouillée, et comprenant aussi l'étape consistant à capter une caractéristique desdits signaux, à déshiniber le fonctionnement de l'alarme anti-intrusion si la caractéristique de l'un desdits au moins deux signaux est au-dessus ou au-dessous d'une valeur seuil et/ou à inhiber le fonctionnement de l'alarme anti-intrusion si la caractéristique de l'un des signaux est en dessous ou au-dessus de ladite valeur seuil ou vice versa, ***caractérisé en ce que*** le procédé comprend, en outre, l'étape consistant à envoyer les signaux à l'ECU (5) via des moyens de communication bidirectionnels, l'ECU détectant ainsi une caractéristique des signaux passant dans les moyens de communication bidirectionnels, et **en ce qu'**il comprend en outre l'étape consistant à inhiber les moyens de communication bidirectionnels si la caractéristique captée de l'un des signaux tombe en dessous de la valeur seuil.

13. Procédé selon la revendication 12, ***caractérisé en qu'**il* comprend l'étape consistant à capter, de manière constante, périodique ou intermittente, une caractéristique du premier signal pendant que l'alarme anti-intrusion est déshinibée.

14. Procédé selon l'une quelconque des revendications 12-13, ***caractérisé en ce qu'**il* comprend l'étape consistant à inhiber le fonctionnement d'une alarme anti-intrusion si la caractéristique est en dessous d'une valeur seuil prédéterminée pendant une période de temps prédéterminée.

15. Procédé selon l'une quelconque des revendications 12-14, ***caractérisé en ce qu'**il* comprend l'étape consistant à déterminer si le système de verrouillage a été actionné par un moyen formant clé dédié (2).

16. Produit programme informatique comprenant un programme informatique stocké au moyen d'un support lisible par un ordinateur conçu pour faire exécuter par un ordinateur ou un processeur les étapes d'un procédé selon l'une quelconque des revendications 12-15.

17. Unité de commande électronique (ECU), ***caractérisée en ce* qu'**elle comprend des moyens d'exécution, une mémoire et des moyens de stockage de données, un programme informatique destiné à faire exécuter par un ordinateur ou un processeur les étapes d'un procédé selon l'une quelconque des revendications 12-15 étant ainsi stocké dans lesdits moyens de stockage de données.
